Europäisches Patentamt

(19) European Patent Office

Office européen des brevets

(11) **EP 0 828 433 B1**

(12) **EUROPEAN PATENT SPECIFICATION**

(45) Date of publication and mention
of the grant of the patent:
**15.12.1999 Bulletin 1999/50**

(21) Application number: **96916157.9**

(22) Date of filing: **22.05.1996**

(51) Int. Cl.$^6$: **A23C 20/00**, A23C 19/028,
A23C 19/082

(86) International application number:
**PCT/EP96/02221**

(87) International publication number:
**WO 96/37115 (28.11.1996 Gazette 1996/52)**

(54) **PROCESSED CHEESE TYPE PRODUCT AND PROCESS THEREFOR**

SCHMELZKÄSE-PRODUKT UND VERFAHREN ZU DESSEN HERSTELLUNG

PRODUIT TRAITE DE TYPE FROMAGER ET PROCEDE DE PREPARATION

(84) Designated Contracting States:
**AT BE DE DK ES FR GB GR IE IT NL SE**

(30) Priority: **26.05.1995 EP 95201386**

(43) Date of publication of application:
**18.03.1998 Bulletin 1998/12**

(73) Proprietors:
• **UNILEVER N.V.**
**3013 AL Rotterdam (NL)**
Designated Contracting States:
**BE DE DK ES FR GR IT NL SE AT**
• **UNILEVER PLC**
**London EC4P 4BQ (GB)**
Designated Contracting States:
**GB IE**

(72) Inventors:
• **BODOR, Janos**
**2281 EC Rijswijk (NL)**
• **KRÖBER, Dieter**
**2582 AR Den Haag (NL)**
• **VAN DER TUIN, Sikko Pieter**
**3144 GC Maassluis (NL)**

(74) Representative:
**Sikken, Antonius H. J. M. et al**
**UNILEVER N.V.,**
**Patent Division,**
**P.O. Box 137**
**3130 AC Vlaardingen (NL)**

(56) References cited:
EP-A- 0 018 604          EP-A- 0 340 857
AU-A- 459 972          AU-A- 500 294
DE-C- 964 652          FR-A- 2 622 772
GB-A- 2 165 134

• **DATABASE FSTA INTERNATIONAL FOOD INFORMATION SERVICE (IFIS), FRANFURT/MAIN, DE AN=76(08):P1498, A. LAPSHINA: "Effect of acidity, cooking salt and disodium phosphate on processing of concentrated milk coagulum and processed cheese quality" XP002013315 & NAUCHNYE TRUDY , vol. 135, 1974, pages 154-157,**
• **FOOD STRUCTURE, vol. 9, no. 1, 1990, pages 23-37, XP000600969 A. TAMIME: "Microstructure and firmness of processed cheese manufactured from cheddar cheese and skim milk powder cheese base"**

## Description

The invention relates to a processed cheese type product and to a process for preparing such product.

Processed cheese has been developed to obtain cheese-like products with improved keepability. A description of processed cheese and related products is given in Kosikowski, Cheese and fermented milk foods, 1966, pp 290-303. Ground cheese is mixed with water and emulsifying salts and heat treated. The pasteurized product is packed. It typically has a pH of 5.6-5.8. A good pasteurized process cheese is said to have a smooth compact body. It can be sliced without crumbling or sticking.

According to the same reference, pasteurized processed cheese spread is made in a manner similar to processed cheese. Incorporation of excess water is permitted in order to give a spreading quality to the product. Greater bacterial activity results and consequently cooking temperatures are very high and the pH low. Processed cheese spreads are cooked to about 88°C or higher and following emulsification with alkaline salts, enough organic acids are introduced to decrease the pH to 5.2 or lower. This reference reflects mainly the situation in the USA, for example, in Europe processed cheese spreads normally have a substantially higher pH, typically 5.5-5.8.

Whereas processed cheese and processed cheese spread have a smooth, somewhat elastic texture that can be sliced or spread without crumbling, cheeses such as white cheese, e.g. Feta, and fresh cheese, e.g. cream cheese or Boursin® have a crumbly texture, i.e. the cheese has a tendency to crumble when trying to slice or spread it.

Such products have a short keepability and they require refrigerated storage. Even though products like Feta have a high salt content, their keepability is usually less than 1 month at refrigerator temperature. They cannot suitably be kept at ambient temperature. They require the use of fresh milk for the production. Especially for the white cheese, commonly milk from sheep, goats and/or buffalo's is employed. These animals have relatively short lactation periods and, as for all animals, the milk composition changes as lactation proceeds. Often, the supply of good quality fresh milk is a problem, and especially when milk from other animals than cows is required, substantial quality fluctuations often occur.

A similar issue often occurs for making processed cheese or processed cheese spread. If one wishes to use e.g. white cheese or fresh cheese as starting material for the process, the short keepability, the need for chilled storage and in the case of white cheese, the fluctuating quality, give rise to serious logistic and quality problems.

It is an object of the present invention to provide cheese-type product with a good keepability, e.g. similar to that of processed cheese, with a crumbly texture, similar to that of white cheese e.g. Feta or typical fresh cheese, and a process for making such product. It is a further object to provide a process for making such product that does not require cheese or milk starting material, or any other starting material with short keepability.

DE 964,652 describes the preparation of a bread-spread wherein a cream is mixed with a "cheese solution", the mixture is heated, optionally homogenized and cooled. To provide firmness, then a culture of lactic acid bacteria or rennet is added under aseptic conditions, the mixture is packed and the structure develops in the pack. As cheese solution, a solution of sodium caseinate or of casein solubilized with phosphates can be used or a solution of processed cheese.

AU 459,972 describes synthetic aged hard cheeses. Hard cheeses, are defined as cheeses that are normally non-spreadable at room temperature or below and excludes cheeses such as cream cheese, cheese spread and the like. The products have "cheese break", i.e. they show clean rupturing upon bending. The products are prepared from fat, protein powder e.g. derived from milk, water and acidulant, and optionally emulsifiers, emulsification salts, acid stabilizers e.g. gums, bulking agents etc. The pH is 4.7-5.2, preferably 5.0. The water content is 31-46%. The product is prepared by mixing and heating together a liquid that is capable of solubilizing the proteinaceous materials, a lipoid, an emulsifier, protein, a stabilizer and other optional ingredients at a temperature of about 60°C until a homogeneous mixture is formed. The product is acidified to coagulate the protein and form a coagulum, emulsified, pasteurized and packed. Homogenisation is not applied. If emulsification salts are used they are added after the acidulation. Acid stabilizers e.g. locust bean gum, guar gum and the like can be used to obtain e.g. a more continuous texture possessing delayed cheese break upon application of bending stress along with a heavier bodied or shorter mouthfeel.

AU 500,294 describes a process for making products resembling pasta filata cheese or cheddar cheese without air holes. The product has a pH of 4.8-5.7 depending on the intended type, it has a water content of about 47% and is made using 15-33% calcium caseinate, and specified acid and fat. It may further contain emulsifiers, emulsifying salts, etc. The product has good shredding or slicing properties and can e.g. be used for making pizza. The process is carried out at a temperature above the melting point of the fat and under sub atmospheric pressure. First the fat and water and possible minor liquid components like flavour and colour are emulsified, then the emulsion and the dry ingredients, including the protein and optional emulsifying salts are mixed, e.g. in a Lodige mixer. The mixed composition is then packed. Homogenisation is not applied.

GB 2,165,134 discloses processed cheese like products having a firm but elastic texture, in the form of slices or of loafs with good slicing and shredding properties. The products have a continuous phase gelatin-carrageenan matrix with fat dispersed therein. They further include an emulsifying agent, e.g. buttermilk powder, mono and diglycerides, phospholipids, non-fat dry milk, etc. The water content is at least 40%, preferably 50-65% and the fat content is 10-30%. The pH is 4.7-6.0, preferably 5.1-5.7. The product may further include up to 50% of a cheese product to provide flavour. To prepare the product, first the gelatin and carrageenan powders are dispersed in the fat, then the minor ingredients are dispersed in the fat and subsequently this fat composition is blended with water and optionally the cheese product and salt. This premix is heated to at least about 70°C with an optional emulsifying salt and then cooled to below 10°C. Alternatively, part or all of the water may be deleted from the premix and be added directly at the cooker. The emulsifying salt may alternatively be included in the premix. If food acid is used it may be dissolved in the premix water or it may be added before, during or after the heat treatment. If no vegetable fat is used in the product, the carrageenan and gelatin may be gradually blended into a moist cheese product, e.g. cream cheese, at 5-25°C.

EP 18,604 describes processed cheese like products which can vary in consistency from sliceable to spreadable to spoonable. The products do not need to contain emulsifiers like mono- or diglycerides or thickening agents. To prepare the products, 20-40% skimmilk powder, 0-45% butterfat, 30-80% water and 2-6% (calculated on dry matter) of a special emulsifying salt mixture are added together, the mixture is heated batch wise under slow stirring to 95°C, homogenised and filled or is heated under fast stirring and then filled. The consistency of the exemplified products is described as smooth (glatt), soft and spreadable, glossy and spoonable, or sliceable.

FR 2,622,772 describes a way to prepare processed cheese-like products that are sliceable or spreadable without needing cheese as starting material, by incorporating polysaccharide texturing agent, e.g. xanthan gum, carrageenan etc. The pH of the product is between 5 and 6, especially between 5.4 and 5.8. The dry matter content is 40-50%, the fat in dry matter content is 40-60%. Starting material for the preparation is concentrated milk or reconstituted concentrated milk which is pasteurized. While still hot, at a temperature above 60°C, preferably 70-80°C. a solution of an organic acid is added to obtain a pH of 4.5-5.2 and protein coagulates. Optionally, whey is removed. Melting salts, if used, and fat are added. The polysaccharide texturing agent can be added at various stages of the process. The mixture is heated to 80-95°C while stirring, it may be homogenized and is then moulded hot. The texture of the exemplified products is described as creme-like (onctueux) and spreadable or as sliceable.

EP 340,857 discloses processed-cheese like spreads prepared from dairy material other than cheese. A typical way to produce the spreads is to acidity a cream or a milk with a starter culture to pH 5.6. Then other components are added, e.g. water, skimmilk powder, butterfat, melting salts, whey protein concentrate etc. The composition is mixed, homogenized, pasteurized or sterilised and the resulting mixture is cooled.

None of the above publications describes a processed cheese like product having a crumbly texture resembling that of typical Feta cheese or fresh cheese or a process to prepare such products. We have now found how such products can be produced.

According to one aspect the invention provides a process for preparing a processed-cheese type product having a crumbly texture, that is free of polysaccharide texturing agent and gelatin, including the steps of

    a) preparing an aqueous composition comprising milk protein, containing milk protein and water in a weight ratio of from 1:2 to 1:10, wherein the pH is caused to be 4.4-5.0, preferably 4.5-4.8 to cause precipitation of protein,
    b) incorporating emulsifying salts to cause an increase in pH and to obtain a pH of 4.8-5.3, preferably 4.9-5.2,
    c) subjecting the mixture to a heat treatment at least sufficient to pasteurize it and passing it through a homogenizer, and
    d) packing the resulting mixture at a temperature of at least 65°C.

Preferred embodiments of the process are given in claims 2-17.

According to another aspect, the invention provides a processed-cheese type product comprising emulsifying salts, having a keepability at ambient temperature of at least 1 month, preferably at least 3 months, more preferably at least 5 months, and having a crumbly texture, that is free of polysaccharide texturing agent and gelatin, that has a pH of 4.8-5.3, a firmness as characterised by the Stevens value at 10°C of 150-1500g, and that comprises 0-65% dispersed fat phase, and 35-100% continuous aqueous phase, which aqueous phase comprises milk protein and water in a weight ratio of 1:2 to 1:10, and wherein the dissolved protein content is less than 40% calculated on the total amount of protein. Preferred embodiments of the product are given in claims 19-22.

Preferably the process is carried out such that the present product is obtained. The product is preferably prepared with the present process.

In step a) of the process, a composition is prepared that comprises at least milk protein and water in a weight ratio of 1:2 to 1:10. The pH is controlled to be 4.4-5.0, which causes protein to precipitate.

The milk protein source used in step a. of the process preferably comprises casein and/or caseinate in an amount of at least 65%, preferably at least 75% of the total amount of protein of the milk protein source. Cheese, e.g. Feta, may be included in the milk protein source, but it is preferred to use a milk protein source comprising protein at least part of which, and preferably all of which, does not originate from cheese.

In a preferred embodiment the composition of step a. is prepared by dispersing a milk protein source in an aqueous medium such that the desired weight ratio of milk protein and water is obtained and the pH is caused to be 4.4-5.0 preferably 4.5-4.8, to cause the precipitation of protein.

To prevent logistic and reliability of supply problems, the milk protein source preferably is material with good keepability, preferably at least 1 month, more preferably at least 3 months at ambient temperature. For example, a pasteurized or sterilised ultra-filtrated milk retentate in liquid form can be used as part or all of the milk protein source. Preferably, however, powders are used. Preferred powders are milk protein concentrate powder, skimmilk powder, whole milk powder, buttermilk powder, ultra filtrated milk powder, sodium caseinate powder and mixtures of two or more thereof. The milk protein should preferably not have been subjected to more severe treatment with heat or chemicals than appropriate to provide the long keepability of the milk protein source. Whey powder or whey protein powder may be used as part of the milk protein source, their amounts are suitably chosen such that the amount of casein(ate) remains as indicated above and that the amount of lactose in the end product does not exceed 8% With higher lactose contents, the product would become too sweet and there is a risk of crystal formation which would adversely affect the mouthfeel of the product.

According to one preferred embodiment, to obtain the desired pH in step a. of the process, the milk protein source is dispersed in water or an aqueous solution and subsequently acid, e.g. organic acid, e.g. lactic acid, acetic acid or citric acid or inorganic acid like phosphoric acid or an acidifying culture is added. If the souring is achieved by means of a culture, a protein source with an adequate amount of lactose is chosen. According to another preferred embodiment an aqueous medium is used that already contains an amount of acid appropriate to obtain the pH required for the mixture after dispersion of the milk protein source and optional other ingredients (see below) into it. Preferred acids for this purpose are organic acids, e.g. lactic acid, acetic acid and citric acid, lactic acid being particularly preferred.

The milk protein source and optional other ingredients can suitably be dispersed in the aqueous medium by treating the mixture in a heavy duty mixer, the use of apparatus that imparts considerable shear being preferred. For example, good results are obtained with a Stephan cutter, operated at 1400 RPM e.g. for 1-10 minutes, typically 2 minutes. Preferably, before, during, or after dispersing the milk protein source and optional other ingredients in the aqueous medium, the temperature of the aqueous medium is adjusted to 40-70°C, preferably 40-60°C, more preferably 50-60°C.

However, if regular supply of reproducible quality fresh dairy product is not a problem, then in or as the mixture of step a. also a fresh cheese or fresh acid coagulated curd can be employed provided that it has or has been adjusted to have the right ratio of milk protein and water and the right pH. Thus, according to another preferred embodiment, in step a. of the process a milk or a concentrated milk is acidified and optionally whey is removed. If the milk that is acidified has a too low milk protein to water ratio, this can be adjusted by removing whey after coagulation of the protein by the acidification, e.g. using a centrifuge or ultrafiltration. Alternatively, a concentrated milk having the right milk protein to water ratio, e.g. prepared via ultrafiltration can be employed. Then after the acidification whey removal can be avoided. The milkprotein to water ratio can also be raised by including milkprotein containing powder on concentrate in the milk before or after the acidification. A combination of these approaches can be used as well. The milk whether concentrated or not, can be whole fat or partially or completely skimmed. As in the embodiment wherein in step a. a milk protein source is dispersed in an aqueous medium, in the present embodiment, the acidification can be done using organic or inorganic acid but preferably it is done using a starter culture. Similarly, in this embodiment also the milk or concentrated milk has preferably not been previously subjected to more severe treatment with heat or chemicals than appropriate for ensuring good microbiological quality. For example, suitably a so-called high (e.g. 10 minutes at 90°C) or low (e.g. 40 seconds at 70°C) pasteurisation can be applied. Also, the lactose content has preferably been chosen such that its concentration in the end product will not exceed 8%.

Whether the mixture of step a. is prepared via acidification of a milk or via dispersion of a milk protein source in an aqueous medium, the origin of the milk protein can be milk of buffalo, sheep, goat, camel, etc. but preferably it is cow's milk.

If in step a. acidification is done using a starter culture, then it must be ensured that the souring stops when the target pH is reached. This can be done e.g. by raising the temperature e.g. to about 60°C for a few minutes, or by choosing the time and temperature profile of the process such that the bacteria are inactivated before the acidification proceeds too far.

Whether the precipitation is caused to occur via acidification with a culture or otherwise, during the precipitation of the protein the temperature is preferably not higher than 60°C. If a culture is used, the optimal temperature depends on the type of culture. For mesophilic cultures, a suitable temperature can e.g. be about 22°C, for thermophilic cultures e.g. about 42°C. If organic or inorganic acid is used the temperature is preferably 40-60°C, especially 50-60°C during the precipitation of the protein. We found that if precipitation of protein is effected at higher temperatures than 60°C, especially above 65°C or 70°C, the resulting product may become sandy, which has a negative influence on the mouthfeel of the end product.

It is essential that in step a. precipitation of protein occurs. We found that best results are obtained if prior to addition of emulsifying salts, the amount of dissolved protein is at most 20%, preferably 0-10%, calculated on the total amount of protein. The amount of remaining dissolved protein can be adjusted by the choice of milk protein source, the pH, and the temperature.

The amount of dissolved protein can determined as follows:

Of the composition in which the dissolved protein is to be determined, the dry matter and total protein (Kjeldahl) contents are determined in conventional manner, giving A% dry matter and B% protein. Then a portion of the composition is diluted in a 1:1 weight ratio with distilled water. The mixture is homogenized with a high shear mixer, e.g. an Ultra Turrax®. The mixture is held at 45°C for 10 minutes. Then it is centrifuged at 5°C for 15 minutes at 9000 rpm. This results in a separation between a layer of precipitated material and a layer of an aqueous solution and if the sample contains fat, a fatty layer. A sample is taken from the aqueous solution and its protein content is determined (Kjeldahl) as C%. The amount of dissolved protein in the starting composition is then:

$$\frac{((100\text{-}A) + 100)}{100} \times \frac{C}{B} \times 100\%$$

Other materials may be incorporated in the product, e.g. fat, salt, flavours, preservatives, colourants etc. Such materials can be included in the mixture at any time prior to the homogenisation in step c. of the process. Preferably they are included before the heat treatment in step c. But, for example, if deodorized vegetable oil is used it may be incorporated after the heat treatment before the homogenisation. For convenience, it is preferred to incorporate all materials other than the emulsifying salts in step a. of the process. When a separate fat source is incorporated, best results are obtained when it is included in step a. If in step a. a protein source is dispersed in an aqueous medium, preferably the fat source is added to the aqueous medium before or at the early stages of the dispersing operation. This is particularly true if as fat source, milk fat or a fat source derived from milk fat, e.g. butter, butterfat, fractions of butterfat or combinations thereof with vegetable oil or fat are used.

If a vegetable fat is included preferably it is a fat having a solids fat content profile with temperature as indicated by Nt-values of N10=40-55, N20=10-25, N35=0-5. Nt indicates the % of solid fat at t°C as measured by NMR (see FSA, 80 (1978), 180-186) with as stabilisation: heat to 80°, keep 10 minutes at 60°C, 60 minutes at 0°C and 30 minutes at the measuring temperature. Preferably however the fat contained in the product is dairy fat.

The amounts of milk protein source and aqueous medium are preferably chosen such that the mixture in step a. comprises milk protein and water in a weight ratio of from 1:4 to 1:8, especially 1:5 to 1:7.

The overall amount of materials employed is preferably such that the end product contains 30-55%, more preferably 30-52%, especially 35-50% dry matter. The end product preferably contains 7-20%, more preferably 8-14% protein and up to 8% more preferably 2-5% lactose. In principle, the fat content of the product can be between 0 and 65%, but preferably it is 10-40% more preferably 15-30%. In particular it is preferred for the composition to be chosen such that the amount of protein expressed on the non-fat contents of the product is 5-30%, especially 8-20%. The protein preferably consists of casein and whey protein in a weight ratio of 2:1 to 30:1, more preferably 3:1 to 10:1. It is especially preferred for the casein and whey protein to be present in a ratio corresponding to that of cow's milk, i.e. about 4:1. Except for the additives described hereafter, the agent used to control the pH and possibly part or all of the water, the other constituents of the product are preferably of dairy milk origin. The other components in the product, e.g. salt, emulsifying salts, flavour, colourant and preservative typically constitute 2-12%, particularly 4-9% of the product. The combined amount of salt and emulsifying salts preferably is 2-6%. Herbs and spices and the like may also be included in the product. If so, the total amount of the other components, i.e. other than water, fat, protein and lactose, may be somewhat higher.

Processed cheese spreads and similar products with this kind of water content i.e. preferably 45-70%, typically include considerable amounts of gelling or thickening agents of the hydrocolloid type, e.g. gums, for example carrageenan or gelatin, to improve the stability of the product and increase the firmness. In the present process such agents should not be used and our product does not include such polysaccharide gelling agents or gelatin. They adversely affect the texture of the product, in particular they cause the crumbly nature of the product to be lost.

Step b. of the process is preferably carried out at 40-70°C, more preferably 50-60°C. The amount of emulsifying salts is preferably 0.1-4%, more preferably 0.5-2.5%, especially 0.5-2.0% calculated on the weight of the product. The emulsifying salts are chosen such that at the indicated amounts they cause the pH to increase, but only to a little extent, to obtain the required pH. They can be chosen from the materials usually used as emulsifying salts, particularly citrates and phosphates, e.g. mono- (i.e. ortho), di- (i.e. pyro) and higher phosphates. The alkali salts, particularly sodium salts, are preferred. Best results were obtained with mixtures of diphosphates and citrates. Particularly tetrasodium diphosphate ($Na_4P_2O_7$) and trisodiumcitrate, are preferred. The weight ratio of diphosphate and citrate employed is preferably less than 1.

It is essential that the pH is not allowed to increase above 5.3, preferably it is kept below 5.2. If the pH is allowed to become too high, the resulting product will get a soft, elastic, smooth and somewhat rubbery structure, not a crumbly and relatively firm structure. On the other hand, the pH of the product should not be below 4.8, and preferably not below 4.9. If the pH of the product is too low, the product may show severe syneresis. Also the mouthfeel of the product may be less good, it is likely to be "sandy".

Upon addition, the emulsifying salts are dispersed into the composition. The emulsifying salts can for example be added in the form of a dry powder or as a solution or a slurry in water. Dispersing the salts can suitably be carried out in the same equipment used in step a. of the process if in that step a protein source is dispersed in an aqueous medium. For example, a Stephan cutter can be used with the bottom knife operated for 0.5-2 minutes at 1400 rpm. (Typically, the wall scraper is operated at much lower speed, e.g. 36 rpm).

Subsequently, the composition is heat treated to at least pasteurize it and passed through a homogenizer. These treatments can be effected in either order, but preferably the composition is first heat treated and then homogenized. The heat treatment can be of such duration and temperature that the product is pasteurized e.g. at 80-90°C for 1-10 minutes. Alternatively, a heat treatment sufficient to sterilize the product can be employed, e.g. at 135-145°C for 3-10 seconds, but pasteurisation is preferred. The temperature applied for the heat treatment preferably is at least 70°C.

It is essential to pass the composition through a homogenizer. Else, the texture and the physical stability of the product will not be good. A slight syneresis may be desirable, since this is also the case with many white cheeses. Without homogenisation, however, the product will not be sufficiently stable. As proteins get closer to their iso-electric point, their water binding capacity reduces. The present product combines proteins at a pH close to their isoelectric point with a fairly high water content and the absence of added water binding hydrocolloid. Yet the product is stable. Homogenisation is essential to achieve this. It is also essential to obtain the crumbly, relatively firm fresh cheese like texture. For these purposes, treating the composition in a regular mixing vessel is insufficient. The composition should be passed through a homogenizer, i.e. an apparatus designed to impart shear to the product. For example, a colloid mill can be used. Preferably a high pressure homogenizer is used, suitably operating at 70-1000 bar, preferably 100-500 bar. Suitable equipment for this is for example a Gaulin® homogenizer.

Preferably, in step d. the product is packed as soon as possible after step c. of the process. Packing should be done at a temperature of at least 65°C, preferably it is done at 70-90°C. Suitably the product is packed in a tub or foil, preferably such that the product is protected from contact with external moisture and air.

Preferably, the compositions and processing are such that the amount of dissolved protein in the end product is less than 40%, preferably 0-30%, more preferably 5-30% particularly 10-30% calculated on the total amount of protein. This can be controlled by the choice of protein source, the pH and temperature in step a, the amount and type of emulsifying salts in step b and the pH of the end product. This pH is preferably less than 5.2. The amount of dissolved protein can be measured as described above. Preferably the amount of dissolved protein in the product is somewhat higher than it is at the end of step a of the process.

The product obtainable according to the present process resembles processed cheese in that it contains emulsifying salts and has a good keepability. But its structure is quite different from that of typical processed cheese and similar products. When freshly broken or cut, the surface is dull, whereas for processed cheese type products it is typically fairly shiny. Also the product has a tendency to crumble when trying to cut or spread it. In these respects, the product is rather similar to typical fresh cheese. These sensorically perceivable product properties are caused by the microstructure of the product, which is quite different from that of typical process cheese type products.

Whereas sensorically textures of different cheese type products are readily distinguished, comparably sensitive and reliable objective measurements are not available. One measurement however that is useful, is the firmness or hardness of the product as characterised by the Stevens value at 10°C, expressed in grams.

Stevens hardness at a certain temperature t is determined after storage of 1 day at t°C, using a 12.6 mm ø cylinder in a Stevens-LFRA Texture Analyzer (ex Stevens Advanced Weighing Systems, Dunmore, U.K. load range 1000 g operated "normal" and set at 10 mm penetration depth and 2.0 mm/s penetration rate.

If the Stevens value exceeds 1000 g it can no longer be measured with this equipment. In that case, the measurement can be done with a Texture Analyzer model TA-XT2 ex Stable Micro Systems, Surrey England using the TPA program, which can operate up to 25 kg. With this equipment, the same probe diameter, and penetration depth and rate are used as with the Stevens. Irrespective of the equipment used, the result is indicated as the Stevens value, expressed in grams.

The Stevens value at 10°C (St 10) of the present product is 150-1500 g, preferably 300-1200 g, more preferably 500-1000 g. Such firmness is comparable to that of typical fresh cheeses like Philadelphia® or Boursin®. For comparison, typical hard or semi-hard cheeses like Gouda, Mozzarella and Cheddar have much higher Stevens values, usually in the order of 4000-10000 g or more. Feta cheeses vary considerably in firmness but usually their firmness is inbetween these groups, a typical Stevens firmness of Feta cheese being e.g. 2500 g. On the other hand, products such as quark are usually much softer than the present product, a typical Stevens value at 10°C being around 70 g.

Another objective measurement that we found useful to characterize texture is Texture Profile Analysis (TPA) as described in Food Technology, July 1978, 62-66. The TPA analysis is done using the Texture Analyzer ex Stable Micro Systems that is also used for measurement of the Stevens value. In the TPA analysis, the probe (cylindrical with 12.6 mm diameter) is pushed into the sample at a rate of 2 mm/s to a depth of 10 mm, then it is pulled out at the same rate. After a rest of 5 seconds, the probe is pushed into the sample once more and pulled out again. The force required to move the probe into and out of the sample is recorded. For the analysis, about 100 g of the sample filled in a non-deformable, polypropylene round tub having a diameter of about 6 cm is used. The sample height should be at least 35 mm. Before the measurement, the sample is conditioned for 24 hours at the measurement temperature.

As described in detail in the examples, the attached figures show TPA diagrams of several products according to the invention and of some other products. In comparing these curves, the shape of the whole curve as well as the magnitude of the force required to move the probe should be considered. However, we believe the distinct rather angular bend in the curve during the first "compression" (first movement of probe into the product) to be more or less typical for products with a crumbly texture like typical fresh cheese and the present products. The publication on TPA in Food Technology cited above, shows in fig. 5B a TPA curve of cream cheese, measured with an Instron Universal Testing Machine. Although this equipment is not fully comparable to the one we used, the graph also shows such a distinct, angular bend during the first compression; indeed the overall shape of the TPA curve is rather similar to those of the products according to the invention.

We believe our dairy based product with its combination of keepability, firmness and crumbliness to be unique. A further important attribute of the product is that it shows little or no syneresis. As described above, a little syneresis, to give the product surface a moist appearance may be a desirable attribute depending on the market for which the product is intended. However, severe syneresis is generally disliked. It is an advantage of the present invention that this low or no syneresis can be realised without the addition of texturing agents like gums or gelatin in significant amounts.

Although we do not wish to be bound by theory, we believe that most of the protein must be present as non-dissolved protein and the use of polysaccharide texturing agent and gelatin must be avoided to be able to obtain a crumbly texture. To prevent the protein from dissolving too much, the pH should not be too high. We believe that the emulsifying salts play a role not only in allowing the composition to be heat treated to make it keepable without getting changes in the protein structure that would make the product unacceptable, but also in preventing severe syneresis. For good taste and mouthfeel, but also to prevent severe syneresis, the pH of the product should not be too low. To be able to obtain the crumbly texture, low or no syneresis as well as the desired firmness, the weight ratio of milk protein and water must be within the specified range. Indeed, it is another special feature of the products of the invention that the products can be relatively firm considering their fat, protein and water contents in the absence of texturing agents like gums and gelatin.

Preferably the present products are free of active lactic acid bacteria and active rennet. The presence of significant amounts of active lactic acid bacteria and/or rennet might change the structure or the taste of the product during storage, which is undesirable. Assuring that significant amounts of such active enzymes or bacteria are not present in the product is readily achieved by applying an adequate heat treatment and packing the product while still hot.

Throughout this description all parts, proportions and percentages are by weight, unless indicated otherwise.

Example 1

A mixture is prepared of 41 parts water, 40 parts butter, 8 parts milk protein concentrate powder (90% protein), 4 parts skimmilk powder, 1.15 parts NaCl in a Stephan cutter (TM) rotating at 1400 rpm at a temperature of 50°C. After obtaining a homogeneous mixture lactic acid is added until a pH value of 4.7 is obtained while stirring. After the pH has been reached, stirring is continued for 2 minutes. Thereafter about 0.5 parts trisodium citrate dihydrate and about 0,2 parts sodiumpyrophosphate are added until a pH value of 5.2 is obtained. This mixture is heated while stirring at 1400 rpm to 85°C and kept at this temperature for 6 minutes. This mixture while still hot is homogenized in a Rannie laboratory homogenizer at 400 bar and immediately filled into suitable tubs, which after closing of the tub by sealing, is cooled down to about 15°C. (For product description, see example 2).

Example 2

The process of example 1 is repeated, with the difference that the following ingredients are used: 48 parts water, 28 parts butter, 5 parts milk protein concentrate powder (90%), 15 parts skimmilk powder, 1,1 parts NaCl, 2,5 parts lactic acid, about 1 part trisodiumcitrate dihydrate and 0,3 parts sodium pyrophosphate.

The resulting products as obtained by the processes of examples 1 and 2 have the following compositions:

|  | example 1 | example 2 |
|---|---|---|
| dry matter | 48 % | 47 % |

(continued)

|  | example 1 | example 2 |
|---|---|---|
| fat | 33 % | 23 % |
| protein | 9 % | 11 % |
| lactose | 2,5 % | 8 % |
| NaCl | 1,4 % | 1,5 % |

The Stevens firmness of the latter product at 10 and 25°C was about 500 and 200, and the typical particle size as determined with a micro screw was about 20 μm. Both products had a structure similar to that of fresh cheese and crumbled when slicing or spreading them.

Example 3

A mixture was prepared from 45 parts water, 24.5 parts butter, 9.5 parts milk protein concentrate containing about 90% protein, 6 parts skimmilk powder, and 3.3 parts taste and flavour materials in a Stephan cutter UMM SK-24, rotating with 1400 rpm at a temperature of 50°C. After having obtained a homogeneous mixture, lactic acid (45%) was added while stirring until a pH value of 4.7 was reached. About 2.3% of the diluted acid was needed. Thereafter 0.3 parts of tetrasodium pyrophosphate and 1.4 parts of sodium citrate dihydrate were added, so that the pH value increased to 5.1. Then the mixture was heated to 85°C while stirring with 1200 rpm and pasteurized at this temperature for 6 minutes. The mixture while still hot was homogenized in a single step Rannie laboratory homogenizer at 200 bar and immediately hot filled into tubs, which after sealing were cooled to 5°C. The product was firm and crumbly in texture resembling fresh cheese. The dissolved protein content of the product was 18 wt% calculated on total protein. The results of further analyses and physical assessments are given in Table I. The product was kept at ambient temperature. After 6 months the product was still very good. No quality defects had developed in the product.

Comparative Example A

Example 3 was repeated, with the difference, that the batch was not pre-acidified, but lactic acid and melting salts were added together with all other materials at the beginning of processing. The pH value was 5.0. The final product was significantly more smooth (processed cheese-like) in texture and not crumbly. It had a less fresh taste. Firmness was substantially less than that of example 3. See table I.

Comparative Example B

The process of example 3 was repeated, but more trisodium citrate was added, which resulted in a pH value of 5.5. This product was less firm, smooth in texture and processed cheese-like. The product had a dissolved protein content of 46% calculated on the total weight of protein. See Table I.

Example 4

The process of example 3 was repeated with lower amounts of melting salts (0.1 parts of tetrasodium pyrophosphate and 0.5 parts of trisodium citrate-dihydrate), resulting in a spread with a pH value of 5.0. This spread was again firm and had the desired crumbly texture resembling that of fresh cheese or white cheese. See also Table I.

Example 5

The composition of example 4 was used for the following experiment:
All ingredients, except the melting salts, were mixed at room temperature in a Stephan cutter with 1400 rpm. The pH value was 4.7. Then the batch was warmed-up to about 50°C, at which temperature the melting salts were added. The pH value increased to 5.0. Further processing was as in example 4. An acceptable product was obtained with this process also, but the particle size was somewhat higher than optimal. See Table I.

Example 6

The process of example 3 was repeated, but using the following composition:

45 parts water, 36 parts butter, 8 parts milk protein concentrate, 3.5 parts skimmilk powder, 1.7 parts taste and flavour components, lactic acid, 0.3 parts tetrasodium pyrophosphate and 1.2 parts sodium citrate dihydrate. Again the final product had the desired short, crumbly texture and a wet surface. See Table I.

Example 7

A composition was processed as described in example 3, using vegetable fat in place of butter. 60 parts water, 15 parts of a vegetable fat blend, 9.5 parts skimmilk powder, 9 parts milk protein concentrate, lactic acid, 0.3 parts tetrasodium pyrophosphate, 1.2 parts sodium citrate dihydrate, and 3.3 parts taste and flavour components, including a cheese flavour were used.
A good crumbly product was obtained but a slight oily off-taste was observed after a storage time of 10 weeks at 5°C. See Table I.

Example 8

Example 7 was repeated with the difference, that 30 ppm EDTA were added. In the final product no oily off-taste could be detected after 6 months at 10°C. See Table I.

Table I

| Example | 3 | Comp. Ex. A | Comp. Ex. B | 4 | 5 | 6 | 7 | 8 |
|---|---|---|---|---|---|---|---|---|
| dry matter % | 41.5 | 41 | 42 | 41 | 42 | 47 | 47.5 | 47.5 |
| fat % | 21 | 21 | 21 | 21 | 21.5 | 30 | 24 | 24 |
| protein % | 11.5 | 11.5 | 11.5 | 11.5 | 11.5 | 10 | 12 | 12 |
| lactose % | 3.5 | 3.5 | 3.5 | 3.5 | 3.5 | 2 | 3.5 | 3.5 |
| firmness (Stevens) : | | | | | | | | |
| - at 10°C | 610 | 480 | 250 | 530 | 920 | 920 | 950 | 700 |
| - at 25°C | 370 | 230 | 105 | 250 | 385 | 270 | 480 | 410 |
| particle size [microns] | 35 | 20 | 20 | 35 | 50 | 30 | 35 | 35 |

Example 9

Whole milk was pasteurised for 10 minutes at 90°C and cooled down to 42°C. A starter culture was added which after some time caused coagulation. The composition was heated to 60°C to inactivate the culture, and passed through a centrifuge in which whey was separated off. The resulting acid curd had a dry matter content of 35%, a fat content of 15%, a protein content of 12% and the pH was 4.8.
The following materials were put in a Stephan cutter:

| 64 | parts | of the acid curd |
|---|---|---|
| 2 | parts | skimmilk powder |
| 0.9 | parts | flavour |
| 5 | parts | butter |
| 2.2 | parts | cooking salt |
| 0.13 | parts | potassium sorbate |
| 0.01 | parts | Nisaplin (preservative) |
| 0.40 | parts | of a 50% solution of lactic acid in water |
| 25 | parts | water |

The composition was heated to 50°C while stirring at 1400 rpm. After the temperature was reached, stirring was continued for 2 minutes. The pH of the mixture was 4.75. Then 0.4 parts tetra sodiumpyrophosphate was added which raised the pH to 4.95. The composition was heated to 80°C and kept at this temperature, while stirring, for 10 minutes. The hot composition was homogenized at 300 bar and filled into tubs while the temperature was still above 70°C. The product was then allowed to cool down.

The resulting product had a dry matter content of 35.1%, a fat content of 14.5%, a protein content of 11.1% and a lactose content of 2.1%. The Stevens 10 value was 620 g. The keepability of the product was excellent. It had a crumbly texture and a good taste. It showed a little syneresis, sufficient to give the surface a moist appearance as desired in some markets.

Examples 10-12

The following composition was put in a Stephan cutter:

| | | |
|---|---|---|
| 6.2 | parts | skimmilk powder |
| 9.85 | parts | milkprotein concentrate (90%) |
| 0.6 | parts | flavour |
| 26 | parts | butter |
| 1.5 | parts | cooking salt |
| 0.11 | parts | preservative |
| 56 | parts | water |
| p.m. | | 50% lactic acid solution (see below) |

The mixture was heated to 50°C and stirring was continued for 3 more minutes. Then sodium citrate and sodiumpyrophosphate were added in amounts as given below. Further processing was as described in example 3. The resulting products had a dry matter content of 39%, a fat content of 21%, a protein content of 11.7% and a lactose content of 3.2%.

The amounts of acid and melting salts used, the pH, Stevens values and dissolved protein contents of the products were:

| Example | ex.10 | ex.11 | ex.12 | Comp.C | Comp.D |
|---|---|---|---|---|---|
| lactic acid solution (parts) | 2.50 | 2.50 | 2.35 | 2.35 | 2.30 |
| Na3. citrate. 2H2O (parts) | 1.0 | 1.0 | 1.0 | 1.0 | 1.0 |
| Na4 pyrophosphate (parts) | 0.3 | 0.4 | 0.6 | 1.0 | 1.3 |
| pH | 5.02 | 5.07 | 5.22 | 5.31 | 5.46 |
| St 10 | 750 | 726 | 174 | 107 | 86 |
| Dissolved protein (%) | 18 | 23 | 38 | 73 | 77 |

All products had good keepability. The products of ex. 10 and ex. 11 were very good. They were relatively firm and had a crumbly texture. The product of ex. 12 was borderline acceptable. It was much less firm and its texture was clearly less crumbly. Although the pH of ex.12 is acceptable, for this composition and process conditions the amount and type of emulsifying salts raised the amount of dissolved protein to a higher than optimal level. For comparison C the pH is still borderline acceptable but the dissolved protein content is much too high. The product is clearly too soft. The crumbliness has disappeared and the product texture is smooth. In comparison D the further increase in melting salts, pH and dissolved protein content has led to an even softer product. The texture of this product also was completely smooth and not crumbly.

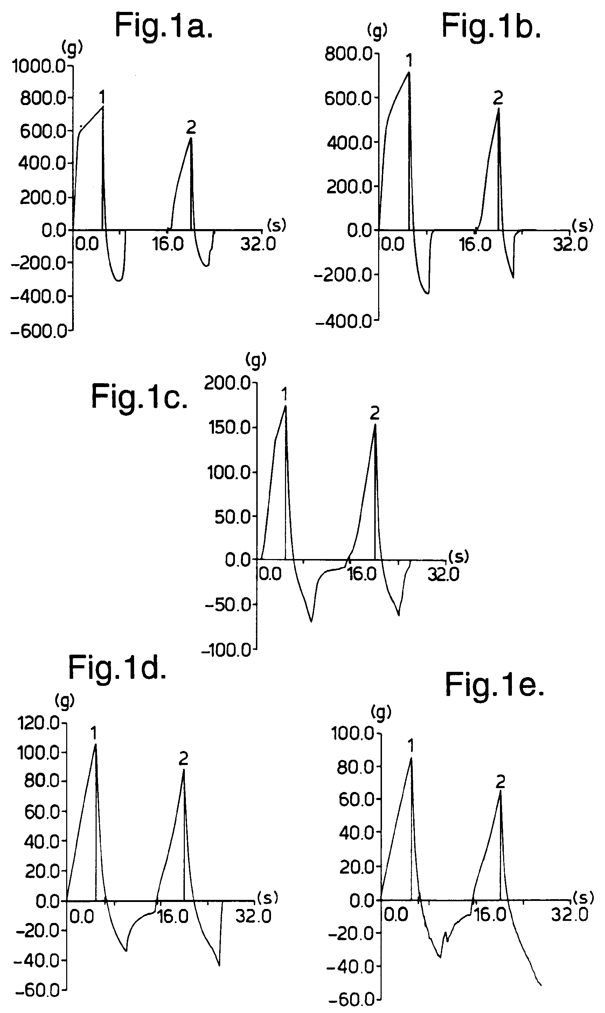

The TPA curves of the products of Examples 10-12 and comparisons C-D at 10°C is shown in Figures 1a-1e.

The curves for examples, 10 and 11 clearly show a rather angular bend during the first movement of the probe into the product. This feature is also still present in the curve of Ex.12 although less pronounced. In the curves of comparisons C and D it has disappeared.

Another feature suggestive of the differences in texture is the surface area of the second peak (resulting from the second movement of the probe into the product) relative to that of the first peak and the width of the base of the second peak relative to that of the first peak. Moving through the series of trials towards higher pH, both these factors increase. This indicates that for the higher pH products, when the probe moves into the product the second time, the product structure has already recovered to a considerable degree from the disruption caused by the probe moving into the product the first time. Crumbly products will generally restore their structure after such a disruption to a less extent than more elastic product.

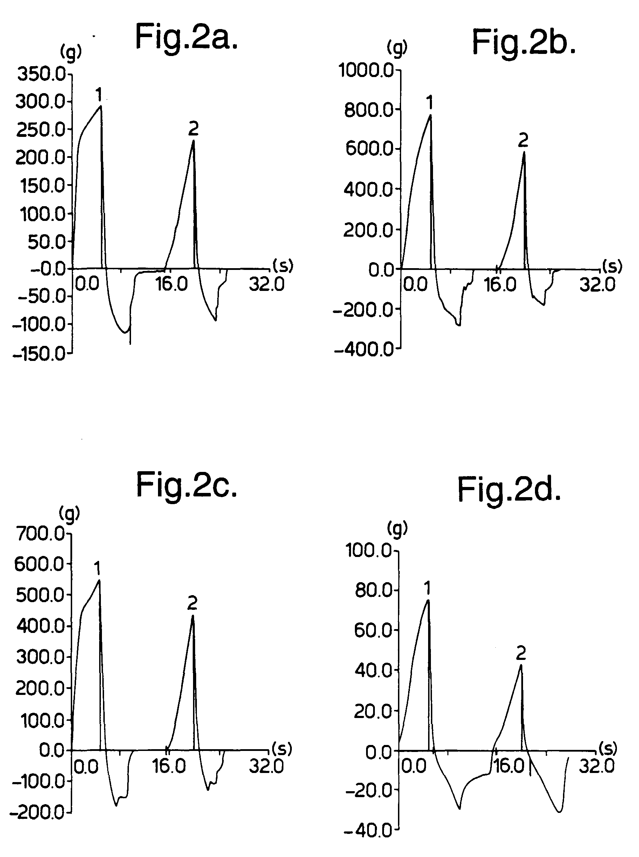

For comparison, Fig. 2a shows the TPA curve of Philadelphia® fresh cheese (fat content 28%). Fig. 2b shows the curve of a fresh cheese with a high fat content (45%). Fig 2c shows the curve of an acid coagulated curd and fig 2d shows the curve of an acidic UF retentate (dry matter content 22%, fat content less than 0.5%, protein content 15% and pH=4.7). The samples for curves 2a, 2b and 2d were measured at 5°C, the acidic curd at 10°C.

The textures of the products shown in curves 2a, 2b and 2c were firm and crumbly. That of the acidic retentate was soft and rather smooth, resembling quark. Acidic UF retentate has a substantially higher water content than typical fresh cheese or acid coagulated curd. None of these products is of the processed cheese type. They all have relatively short keepability.

The curves of Figures 2a and 2c are rather similar to those of examples 10 and 11. Fig. 2b shows the same characteristics as far as the comparison of the 2nd peak with the 1st peak is concerned. However the angular bend in the first peak is missing although the texture is crumbly. We believe that is related to the high fat content of the product. (A product similar to that of the fresh cheese of fig. 2b but with a fatcontent of 35%, had a TPA curve with a shape more resembling that of Fig. 2a, but the peakheights, i.e. the maximum forces, were very similar to those of Fig. 2b). This illustrates that TPA curves need to be interpreted with care and provide the clearest guidance when comparing samples from a coherent trial design as the one shown in figure 1. The figure 2d of the acidic UF retentate resembles the curves of comparisons C and D in that the height of the first peak is low, consistent with the softness of the product, in that the angular bend is absent and in that the base of the second peak is relative broad. The relative surface area of the second peak in fig. 2d is however lower than those of fig. 1d and 1e, again illustrating the need for careful interpretation when comparing TPA curves of different product types.

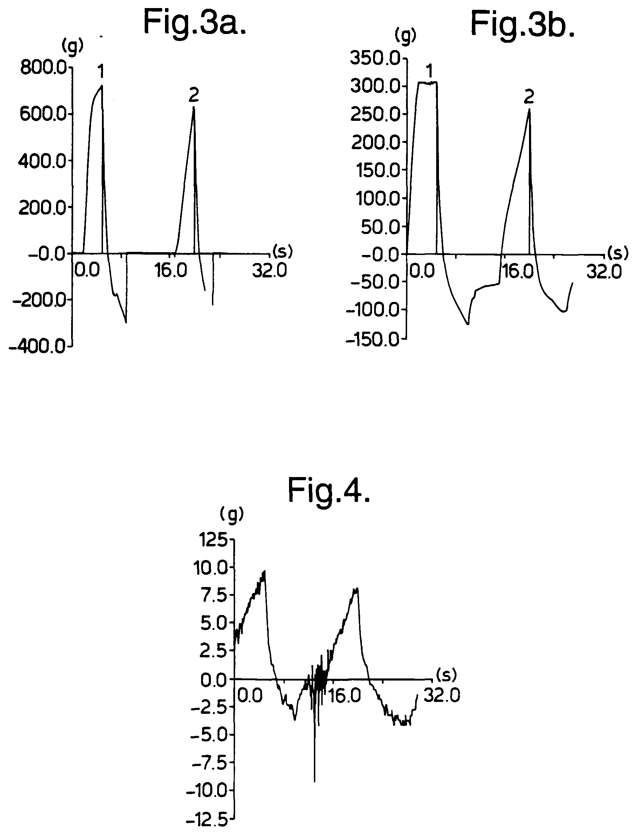

As a further comparison, fig. 3a shows the TPA curve of Kiri®. The product is a processed cheese prepared in conventional manner on the basis of cream cheese. It had a pH of 5.45, and a dry matter content of 46.5%. Its dissolved protein content was 35%. Its texture was smooth, not crumbly. The Stevens value at 10°C was 725 g. This product illustrates that dissolved protein content and Stevens value alone are not sufficient to obtain a crumbly texture. A high pH cannot be tolerated if the desired product is to be obtained.

The St10 value of Kiri® is relatively high compared with comparative examples C and D. This relates among other things to the higher dry matter content. Keeping in mind that this high Stevens value affects the appearance of a TPA curve, the shape of the curve of Kiri® is more similar to those of comparisons C and D than to those of examples 10 and 11. In figure 3 in the first peak there is a bit of a bend near the top, but it is a rounded bend rather than an angular bend. The surface area and width of the 2nd peak are relatively large compared with those of the first peak.

Also for comparison, fig. 3b shows the TPA curve of a conventional processed cheese wedge of the brand Sahne® at 10°C. In this case the measurement is carried out on the wedge as such, without putting it into a tub. This product had a pH of 5.7, a dissolved protein content of 75% and a St 10 value of 310 g.

As shown in figure 3b, when moving the probe into the product the first time, the required force rapidly increased to its maximum. Then moving the probe further into the product to reach the maximum depth of 10 mm, could be achieved at the same force. The width of the second peak relative to that of the first peak is very similar to those of comparisons C and D. The surface area of the second peak relative to the first peak is inbetween those of comparisons C and D on the one hand and examples 10 and 11 on the other.

Comparitive example E

This trial was done to evaluate the teaching of FR 2622772 (example 2).

20.25 parts skimmilk powder and 0.04 parts lamoda carrageenan were dispersed in 34 parts water. The mixture was heated and pasteurised at 85°C for 5 minutes. The solution was allowed to cool down to about 75°C and 50% citric acid solution in water was added until the pH was 5.08.

Subsequently, at 75°C 12.3 parts of an aqueous solution of 2 parts emulsifying salts (tripolyphosphate) and 0.3 parts cooking salt in 10 parts water, and 22.4 parts of sunflower oil were stirred in.

The mixture was kept at 75°C for 10 minutes, heated to 85°C, 0.1 parts of carrageenan, 0.1 parts of locust bean gum and 0.1 parts xanthan gum in 10.2 parts water were added and the mixture was kept at 85°C for 10 minutes. The mixture was homogenised at 150 bar, filled in tubs and stored at 5°C for 7 days.

The resulting product was soft, its St10 value was 10 g. The texture was smooth. The pH was 5.6 and the dissolved protein content was 80%. Because of the softness of the product, the noise level during the TPA measurement was very high. The curve obtained is shown in figure 4.

**Claims**

1. Process for preparing a processed-cheese type product having a crumbly texture, that is free of polysaccharide texturing agent and gelatin, including the steps of

   a) preparing an aqueous composition comprising milk protein, containing milk protein and water in a weight ratio of from 1:2 to 1:10, wherein the pH is caused to be 4.4-5.0, preferably 4.5-4.8, to cause precipitation of protein,
   b) incorporating emulsifying salts to cause an increase in pH and to obtain a pH of 4.8-5.3, preferably 4.9-5.2,
   c) subjecting the mixture to a heat treatment at least sufficient to pasteurize it and passing it through a homogenizer, and
   d) packing the resulting mixture at a temperature of at least 65°C.

2. Process according to claim 1, wherein step a) comprises dispersing a milk protein source in an aqueous medium such that the weight ratio of milk protein and water is from 1:2 to 1:10 and causing the pH to be 4.4-5.0, preferably 4.5-4.8 to cause precipitation of protein.

3. Process according to claim 2, wherein the milk protein source is a composition with a keepability at ambient temperature of at least 1 month.

4. Process according to claim 2 or claim 3, wherein the milk protein source comprises milk protein concentrate powder, skimmilk powder, whole milk powder, buttermilk powder, ultra filtrated milk powder, sodium caseinate powder or a mixture of 2 or more thereof and further comprises optionally whey powder and/or whey protein powder.

5. Process according to any one of claims 2-4, wherein the aqueous medium comprises acid in an amount appropriate to obtain the required pH in step a.

6. Process according to any one of claims 2-4, wherein the milk protein source is dispersed in the aqueous medium and subsequently organic acid or an acidifying culture is added to obtain the required pH.

7. Process according to claim 1 wherein in step a) a milk or a concentrated milk is acidified and optionally whey is removed.

8. Process according to any one of claims 1-7 wherein in step a) the precipitation of protein is caused to occur at a temperature of 60°C or less.

9. Process according to any one of claims 1-8, wherein before addition of the emulsifying salts the mixture comprises milk protein and water in a weight ratio of 1:4 to 1:8 preferably 1:5 to 1:7.

10. Process according to any one of claims 1-9, wherein before addition of the emulsifying salts the mixture comprises at most 20%, preferably 0-10% dissolved protein, calculated on the total amount of protein.

11. Process according to any one of claims 1-10, wherein the mixture to which the emulsifying salts are added has a temperature of 50-60°C.

12. Process according to any one of claims 1-11, wherein prior to the homogenisation a fat source is included.

13. Process according to claim 12, wherein the fat source comprises milk fat, fat derived from milk fat, vegetable fat or a mixture thereof.

14. Process according to any one of claims 1-13, wherein prior to the homogenisation a flavour composition is included.

EP 0 828 433 B1

15. Process according to any one of claims 1-14, wherein the homogenizer is a high pressure homogenizer.

16. Process according to claim 15, wherein the pressure is 70-1000 bar, preferably 100-500 bar.

17. Process according to any one of claims 1-16, wherein the resulting mixture is packed at a temperature of 70-90°C.

18. Processed-cheese type product comprising emulsifying salts, having a keepability of at least 1 month at ambient temperature and having a crumbly texture, that is free of polysaccharide texturing agent and gelatin, that has a pH of 4.8-5.3, a firmness as characterised by the Stevens value at 10°C of 150-1500 g, and that comprises 0-65% dispersed fat phase and 35-100% continuous aqueous phase, which aqueous phase comprises milk protein and water in a weight ratio of 1:2 to 1:10, and wherein the dissolved protein content is less than 40% calculated on the total amount of protein.

19. Product according to claim 18 that is free of active lactic acid bacteria and active rennet.

20. Product according to claim 18 or 19, having a dry matter content of 30-55%, preferably 35-50%.

21. Product according to any one of claims 18-20 having a dissolved protein content of 0-30%, preferably 5-30%, more preferably 10-30% calculated on the total amount of protein.

22. Product according to any one of claims 18-21, obtainable by the process of any one of claims 1-17.

**Patentansprüche**

1. Verfahren zur Herstellung eines schmelzkäseartigen Produktes mit krümeliger Textur, das frei von Polysaccharid-Texturierungsmittel und Gelatine ist, das die Schritte einschließt:

   a) Herstellen einer Milchprotein umfassenden wäßrigen Zusammensetzung, die Milchprotein und Wasser in einem Gewichtsverhältnis von 1:2 bis 1:10 enthält, während man einen pH von 4,4 bis 5,0, vorzugsweise 4,5 bis 4,8, einstellt, um das Ausfallen des Proteins zu bewirken,
   b) Einverleiben emulgierender Salze, um eine pH-Erhöhung und die Erzielung eines pH von 4,8 bis 5,3, vorzugsweise 4,9 bis 5,2, zu bewirken,
   c) Unterwerfen der Mischung einer Wärmebehandlung, die zumindest zu ihrer Pasteurisierung ausreicht, und Hindurchführen durch einen Homogenisator und
   d) Abpacken der erhaltenen Mischung bei einer Temperatur von mindestens 65°C.

2. Verfahren nach Anspruch 1, worin Schritt a) das Dispergieren einer Milchproteinquelle in einem wäßrigen Medium umfaßt, so daß das Gewichtsverhältnis von Milchprotein zu Wasser 1:2 bis 1:10 beträgt, und man einen pH von 4,4 bis 5,0, vorzugsweise 4,5 bis 4,8, einstellt, um ein Ausfallen des Proteins zu bewirken.

3. Verfahren nach Anspruch 2, worin die Milchproteinquelle eine Zusammensetzung mit einer Haltbarkeit bei Umgebungstemperatur von mindestens 1 Monat ist.

4. Verfahren nach Anspruch 2 oder 3, worin die Milchproteinquelle Milchprotein-Konzentratpulver, Magermilchpulver, Vollmilchpulver, Buttermilchpulver, ultra-filtriertes Milchpulver, Natriumkaseinatpulver oder eine Mischung aus zwei oder mehreren derselben und weiterhin fakultativ Molkepulver und/oder Molkeproteinpulver umfaßt.

5. Verfahren nach mindestens einem der Ansprüche 2 bis 4, worin das wäßrige Medium Säure in einer zur Erzielung des in Schritt a) geforderten pH-Wertes angemessenen Menge umfaßt.

6. Verfahren nach mindestens einem der Ansprüche 2 bis 4, worin die Milchproteinquelle in dem wäßrigen Medium dispergiert wird und anschließend organische Säure oder eine ansäuernde Kultur zur Erzielung des geforderten pH-Wertes zufügt wird.

7. Verfahren nach Anspruch 1, worin in Schritt a) eine Milch oder eine konzentrierte Milch angesäuert und fakultativ Molke entfernt wird.

8. Verfahren nach mindestens einem der Ansprüche 1 bis 7, worin in Schritt a) die Ausfällung des Proteins bei einer

13

Temperatur von 60°C oder weniger bewirkt wird.

9. Verfahren nach mindestens einem der Ansprüche 1 bis 8, worin die Mischung vor Zugabe der emulgierenden Salze Milchprotein und Wasser in einem Gewichtsverhältnis von 1:4 bis 1:8, vorzugsweise 1:5 bis 1:7, umfaßt.

10. Verfahren nach mindestens einem der Ansprüche 1 bis 9, worin die Mischung vor Zugabe der emulgierenden Salze höchstens 20%, vorzugsweise 0 bis 10%, gelöstes Protein, berechnet auf die Gesamtmenge an Protein, umfaßt.

11. Verfahren nach mindestens einem der Ansprüche 1 bis 10, worin die Mischung, der die emulgierenden Salze zugegeben werden, eine Temperatur von 50 bis 60°C aufweist.

12. Verfahren nach mindestens einem der Ansprüche 1 bis 11, worin vor der Homogenisierung eine Fettquelle mitverwendet wird.

13. Verfahren nach Anspruch 12, worin die Fettquelle Milchfett, von Milchfett abgeleitetes Fett, pflanzliches Fett oder eine Mischung davon umfaßt.

14. Verfahren nach mindestens einem der Ansprüche 1 bis 13, worin vor der Homogenisierung eine Aromazusammensetzung mitverwendet wird.

15. Verfahren nach mindestens einem der Ansprüche 1 bis 14, worin der Homogenisator ein Hochdruck-Homogenisator ist.

16. Verfahren nach Anspruch 15, worin der Druck 70 bis 1000 bar, vorzugsweise 100 bis 500 bar, beträgt.

17. Verfahren nach mindestens einem der Ansprüche 1 bis 15, worin die erhaltene Mischung bei einer Temperatur von 70 bis 90°C abgepackt wird.

18. Emulgierende Salze umfassendes schmelzkäseartiges Produkt mit einer Haltbarkeit von mindestens 1 Monat bei Umgebungstemperatur und einer krümeligen Textur, das frei von Polysaccharid-Texturierungsmittel und Gelatine ist, das einen pH-Wert von 4,8 bis 5,3, eine durch den Stevens-Wert bei 10°C charakterisierte Festigkeit von 150 bis 1500 g aufweist und 0 bis 65% dispergierte Fettphase und 35 bis 100% kontinuierliche wäßrige Phase umfaßt, welche wäßrige Phase Milchprotein und Wasser in einem Gewichtsverhältnis von 1:2 bis 1:10 umfaßt und worin der gelöste Proteingehalt weniger als 40% beträgt, berechnet auf die Gesamtmenge an Protein.

19. Produkt nach Anspruch 18, das frei von aktiven Milchsäurebakterien und aktivem Lab ist.

20. Produkt nach Anspruch 18 oder 19 mit einem Trockensubstanzgehalt von 30 bis 55%, vorzugsweise 35 bis 50%.

21. Produkt nach mindestens einem der Ansprüche 18 bis 20 mit einem Gehalt an gelösten Protein von 0 bis 30%, vorzugsweise 5 bis 30%, insbesondere 10 bis 30%, berechnet auf die Gesamtmenge an Protein.

22. Produkt nach mindestens einem der Ansprüche 18 bis 21, das nach dem Verfahren gemäß irgendeinem der Ansprüche 1 bis 17 erhältlich ist.

**Revendications**

1. Procédé de préparation d'un produit du type fromage traité ayant une texture friable qui est exempt d'agent de texture polysaccharide et de gélatine, comprenant les stades de :

   a) préparer une composition aqueuse comprenant une protéine de lait, contenant la protéine de lait et l'eau en un rapport pondéral de 1:2 à 1:10, le pH étant déterminé à 4,4-5,0, de préférence 4,5-4,8 pour provoquer la précipitation de la protéine,
   b) incorporer des sels émulsifiants pour provoquer une augmentation du pH et pour obtenir un pH de 4,8 à 5,3, de préférence 4,9 à 5,2,
   c) soumettre le mélange à un traitement par la chaleur au moins suffisamment pour le pasteuriser et le faire passer dans un homogénéisateur et
   d) emballer le mélange résultant à une température d'au moins 65°C.

**2.** Procédé selon la revendication 1, dans lequel le stade a) comprend la dispersion d'une source de protéine de lait dans un milieu aqueux de sorte que le rapport pondéral de la protéine de lait et de l'eau est 1:2 à 1:10 et la détermination du pH à 4,4-5,0, de préférence 4,5-4,8 pour provoquer la précipitation de la protéine.

**3.** Procédé selon la revendication 2, dans lequel la source de protéine de lait est une composition ayant une aptitude à la conservation à température ambiante d'au moins 1 mois.

**4.** Procédé selon la revendication 2 ou 3, dans lequel la source de protéine de lait comprend un concentré en poudre de protéine de lait, du lait écrémé en poudre, du lait entier en poudre, du babeurre en poudre, du lait en poudre ultrafiltré, du caséinate de sodium en poudre ou un mélange de deux ou plusieurs de ceux-ci et elle comprend de plus facultativement du petit lait en poudre et/ou de la protéine de petit lait en poudre.

**5.** Procédé selon l'une quelconque des revendications 2 à 4, dans lequel le milieu aqueux comprend un acide en une quantité appropriée pour obtenir le pH exigé au stade a).

**6.** Procédé selon l'une quelconque des revendications 2 à 4, dans lequel la source de protéine de lait est dispersée dans le milieu aqueux et, ensuite, on ajoute l'acide organique ou une culture acidifiante pour obtenir le pH exigé.

**7.** Procédé selon la revendication 1, dans lequel au stade a), on acidifie un lait ou un lait concentré et, facultativement, on enlève le petit lait.

**8.** Procédé selon l'une quelconque des revendications 1 à 7, dans lequel au stade a), on provoque la précipitation de la protéine à une température de 60°C ou moins.

**9.** Procédé selon l'une quelconque des revendications 1 à 8, dans lequel avant l'addition des sels émulsifiants, le mélange comprend la protéine de lait et l'eau en un rapport pondéral de 1:4 à 1:8, de préférence 1:5 à 1:7.

**10.** Procédé selon l'une quelconque des revendications 1 à 9, dans lequel avant l'addition des sels émulsifiants, le mélange comprend au plus 30%, de préférence 0 à 10% de protéine dissoute, calculés par rapport à la quantité totale de protéine.

**11.** Procédé selon l'une quelconque des revendications 1 à 10, dans lequel le mélange auquel on ajoute les sels émulsifiants a une température de 50 à 60°C.

**12.** Procédé selon l'une quelconque des revendications 1 à 11, dans lequel avant l'homogénéisation, on incorpore une source de graisse.

**13.** Procédé selon la revendication 12, dans lequel la source de graisse comprend la graisse de lait, une graisse dérivée de la graisse de lait, une graisse végétale ou leur mélange.

**14.** Procédé selon l'une quelconque des revendications 1 à 13, dans lequel avant l'homogénéisation, on incorpore une composition d'arôme.

**15.** Procédé selon l'une quelconque des revendications précédentes 1 à 14, dans lequel l'homogénéisateur est un homogénéisateur à haute pression.

**16.** Procédé selon la revendication 15, dans lequel la pression est de 70 à 1000 bar, de préférence 100 à 500 bar.

**17.** Procédé selon l'une quelconque des revendications 1 à 16, dans lequel on emballe le mélange résultant à une température de 70 à 90°C.

**18.** Produit du type fromage traité comprenant des sels émulsifiants, ayant une aptitude à la conservation d'au moins 1 mois à température ambiante et ayant une texture friable, qui est exempt d'agent de texture polysaccharide et de gélatine, qui a un pH de 4,8 à 5,3, une fermeté caractérisée par la valeur STEVENS à 10°C de 150 à 1500 g, et qui comprend 0 à 65% de phase grasse dispersée et 35 à 100% de phase aqueuse continue, cette phase aqueuse comprenant une protéine de lait et de l'eau en un rapport pondéral de 1:2 à 1:10 et la teneur en protéine dissoute étant inférieure à 40% calculés par rapport à la quantité totale de protéine.

**19.** Produit selon la revendication 18, qui est exempt de bactéries d'acide lactique actives et de présure active.

**20.** Produit selon la revendication 18 ou 19, ayant une teneur en matière sèche de 30 à 55%, de préférence 35 à 50%

**21.** Produit selon l'une quelconque des revendications 18 à 20 ayant une teneur en protéine dissoute de 0 à 30%, de préférence 5 à 30%, mieux 10 à 30%, calculés par rapport à la quantité totale de protéine.

**22.** Produit selon l'une quelconque des revendications 18 à 21, qu'on obtient par le procédé selon l'une quelconque des revendications 1 à 17.

# Fig.1a.

# Fig.1b.

# Fig.1c.

# Fig.1d.

# Fig.1e.

# Fig.2a.

# Fig.2b.

# Fig.2c.

# Fig.2d.

# Fig.3a.

(g)

# Fig.3b.

(g)

# Fig.4.

(g)